# EUROPEAN PATENT APPLICATION

(11) **EP 0 608 672 A1**
(43) Date of publication of application: **03.08.1994**
(21) Application number: 93850245.7
(22) Date of filing: 27.12.1993
(51) Int. Cl.: F16C 33/80

(54) **Labyrinth seal for oil lubricated plummer block housings**

(30) Priority: 27.01.1993 SE 9300239
(71) Applicant: SKF MEKAN AB, S-641 30 Kaatrineholm (SE)
(72) Inventor: Persson, Stig, S-641 31 Katrineholm (SE)
(74) Representative: Forsberg, Lars-Ake

(57) **Abstract**

A labyrinth seal (10) for oil lubricated bearing housings (1) with through-openings (8) for a journaled shaft (7) and incorporating a sleeve (17) arranged on shaft (7) and having a radial wall (18), having its outer edge spaced from shaft to form an inclined surface (19), an annular part arranged in through-opening (8) and provided with a radial part (21) and an inclined surface (22) complementary to the inclined surface (19) of the sleeve, said sleeve (17) and said annular part, forming between them, a labyrinth slot (23), the inclined surface (22) of the annular part being provided on a wall portion (22a) projecting into the housing from the radial part (21), said wall portion (22a) sloping outwards-inwards and forming with the plummer block housing a drainage groove (33) for leading oil from the upper part of the inner housing surface back to the lower part of the housing, which acts as oil sump, thereby guaranteing that labyrinth seal is reached only by a minimum quantity of oil.

## Description

The present invention refers to a labyrinth seal for oil lubricated, horizontally split plummer block housings having in the gables through-openings for a shaft, supported in at least one bearing in the plummer block housing and incorporating a sleeve-shaped part arranged on the shaft and having a radial wall, the radially outer edge of which, is spaced from the shaft and forms an inclined surface, and an annular part arranged in the through opening of the plummer block housing and provided with a radially extending part and an inclined surface forming a complement to the inclined surface of the sleeve-shaped part, said sleeve-shaped part and said annular part, when assembled, forming between them a labyrinth slot extending between its opposed side surfaces.

The gable openings about such a shaft is sealed off in circumferential sealing grooves with individually chosen seals of different kinds depending on different assembly requirements, i.e. lubrication method, operation temperature, speed, etcetera.

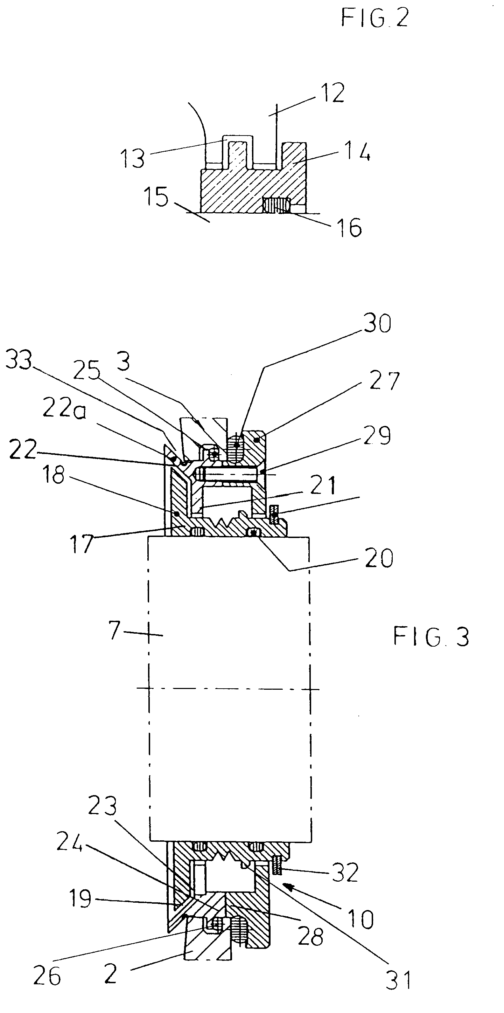

Different rubbing lip or felt seals, are generally used for grease lubricated bearings, whereas rubbing V-ring seals or simple labyrinth seals in combination with O-rings have commonly been used for oil lubricated bearings. (see Fig. 2).

As the sealing groove in the two halves of the plummer block housing are not machined together, it however has occured difficult to avoid oil leakage with earlier seals at oil lubrication. This of course must be avoided for many reasons, not the least as the oil at leakage may cause contamination and even damages to the place where the bearing assembly is used, and also to products present at this place.
Attempts to get the plummer block housing entirely leakproof e.g. with four cooperating V-ring seals, thus have not been succesful.

US-A-1,919,248 discloses a labyrinth seal of the type described in the introductory part of the description and being arranged in an non-split, oil lubricated bearing housing, which labyrinth seal is asserted to give a pumping effect securing that oil having a tendency of escaping from the bearing housing through the sealing slot, will be returned into the bearing housing. Hereby all oil splashing up on the upper part of the interior of the bearing housing, during operation of the bearing assembly, will come in contact with the labyrinth seal, thereby subjecting this to a big quantity of oil, which is less desirable. The same conditions apply to the sealed off roller bearing device according to US-A-4,527,915.

The purpose of the present invention is to provide a labyrinth seal for an oil lubricated plummer block housing of the type described, by means of which is obtained an almost total safety against oil leakage, partly due to the fact that so much of the internal oil splashes as possible is prevented from reaching the labyrinth seal, and this has been achieved in that the labyrinth seal has been given the features defined in the attached claims.

Hereinafter the invention will be described with reference to an embodiment shown in the accompanying drawings.
Fig. 1 shows a vertical, axial cross-section through a plummer block housing equipped with a labyrinth seal in accordance with the present invention,
Fig. 2 is a section through a portion of a simple labyrinth seal earlier used for the same purpose,
Fig. 3 shows separately the labyrinth seal shown in Fig. 1, and
Fig. 4 is a detail of Fig. 1 shown in bigger scale.

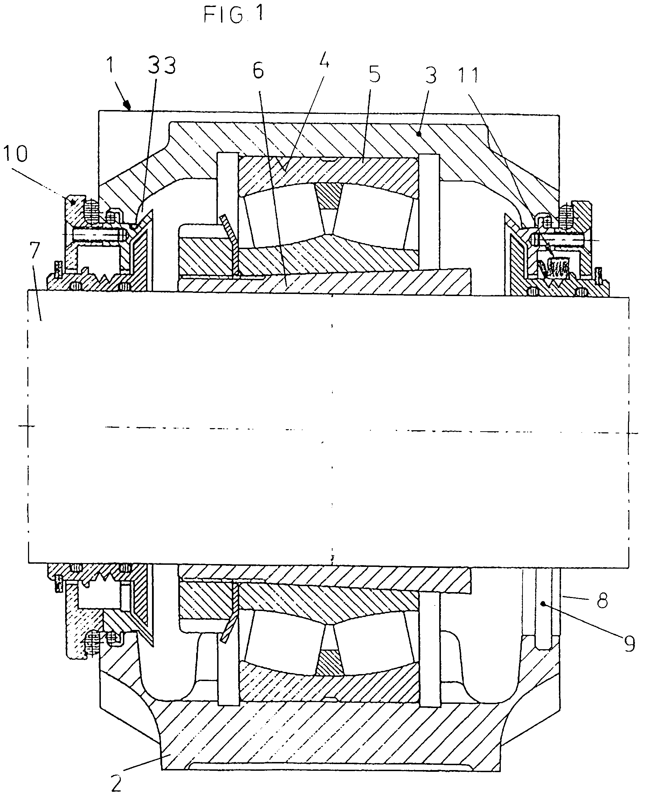

Fig. 1 shows in a vertical axial section a plummer block housing 1 comprising a lower half 2 and an upper half 3, i.e. the plummer block housing is split along a horizontal plane into two halves. In a cylindrical bearing seat 4 shaped in the interior of the housing 1 there is provided a non-locating bearing 5, in the embodiment shown a spherical roller bearing, which via an adapter sleeve 6 is mounted on a shaft 7 extending through the plummer block housing and passing through openings 8 provided in the gables of the housing. Each one of these openings 8 is provided with a circumferential groove 9 intended to receive a seal. In the lower right-hand corner of Fig. 1, the opening 8 of the plummer block housing is shown for the sake of clarity, without the part of the seal actually positioned therein.

In the slots between the shaft 7 and each one of the two openings 8 in the plummer block housing gables, there is provided a labyrinth seal 10 in accordance with the invention, which seal secures that oil contained in the interior of the plummer block housing for lubrication purposes, will not leak out from the plummer block housing, and it also furthermore prevents contaminations from penetrating into the plummer block housing from outside. The labyrinth seal 10 will be described more in detail in connection to Fig. 3, but it can be mentioned, that it may be appropriate in certain cases to provide a V-ring seal in the interior of the labyrinth seal, such as intimated at 11 in order to reinforce the sealing effect.

In Fig. 2 is shown a schematic section through a portion of a plummer block housing 12 having fitted a conventional, simple labyrith seal 14 in a circumferential groove 13 in one gable opening of the housing, said labyrinth seal together with the groove 13 forming a labyrinth at the side facing away from the shaft 15 and which is sealed off towards the shaft by means of an O-ring 16 clamped between the shaft and a groove. With this type of labyrinth seal there has thus been problems with oil leakage, as stated above.

In Fig. 3 the labyrith seal according to the invention is shown separately with parts of bearing housing 3 and shaft 7 only intimated, and as can be seen from this figure, the labyrinth seal incorporates a sleeve-shaped part and a two-piece ring fitted in the gable opening 8 in the plummer block housing and cooperating with the sleeve-shaped part. As shown in Fig, 1, in operation position the labyrinth seal is positioned with its left-hand side as shown in Fig. 3 facing the interior of the plummer block housing.

At one of its ends the sleeve-shaped part 17 is provided with a flange 18 directed radially outwards, and being obliquely cut off at its periphery, thus that an inclined surface 19 facing away from the bearing is obtained.

The sleeve 17 is not arrested in axial direction but can move axially relative to the shaft, against which the sleeve is sealed off by means of O-rings 20 positioned in circumferential grooves in the interior of the sleeve.

The other part of the labyrinth seal, which is constituted by the split ring, arranged in the gable opening of the plummer block housing, is split along a radial plane and incorporates a first portion facing the interior of the plummer block housing and having a radial wall 21 and an inclined surface 22 projecting angularly from the outermost edge of said wall, the surface 22 being a complement to the inclined surface 19 of the flange 18 in the sleeve-shaped part 17, said inclined surfaces 19,22 between them enclose a small-sized and angled labyrinth or slot 23 when the labyrinth seal is in its correct, assembled position. The first portion of the split ring furthermore has a portion 24 projecting axially from the outer part of the radial wall 21 in a direction opposite to that of the angled inclined wall 22, said axially projecting portion 24 adjacent to its end being provided with an outer circumferential ridge 25, which in a position, where the seal is assembled, engages in the circumferential groove 9 of the plummer block housing and interacts with a seal 26, preferably an O-ring, positioned in the groove, said seal 26 in order to seal off the groove.

The other part of the split ring comprises a radial portion 27 as seen in cross-section and an axial portion 28 extending mainly from the centre of said radial portion. The two parts of the split ring are adapted to be interconnected by means of screws 29, each one extending through an axial through-bore in the axial portion 28 of the other ring portion 26 and which can be screwed into an axial, threaded bottom hole in the axial portion 24 of the first ring portion. By inserting the ridge 25 of the first ring portion in the groove 9 of the of the housing gable opening 8, together with the above-mentioned flexible seal 26, positioned against the outwardly facing wall surface of the groove 9, and positioning in a corresponding manner a flexible seal 30 between the ring portion 27 situated radially outside the axial portion 28 of the other portion of the split ring and the outer wall of the plummer block housing, it will be possible at tightening of a number of such screws 29, preferably positioned evenly spaced apart along the circumference of the labyrinth seal, and the screw heads of which are preferably counter-sunk, to achieve a clamping of the plummer block housing gable wall between the ridge 25 and the outer part of the radial portion 27 via the intermediate flexible O-ring seals 26 and 30, resp. The split ring of the labyrinth seal, which ring is situated in the plummer block housing, in this manner will be arrested radially as well as axially.

The sleeve 17 however, as mentioned above, is not arrested axially but can move relative to the outer split ring portion of the labyrinth seal a short distance, which is limited in one direction by an annular flange 31 projecting from the outer surface of the sleeve 17, and which at axial movement outwards by the sleeve relative to the arrested ring, will engage the lower part of the second ring portion in the radial wall 27 of the split ring part and thereby counteract the two inclined surfaces 19 and 22 from contacting each other mechanically. The axial movement of the sleeve in opposite direction is limited by a locking ring 32 affixed to the external periphery of the sleeve, and said locking ring also engaging the lower part of the radial wall 27 of the second ring portion, and these two motion limiting elements limit the possible size variation the slot 23 formed between the inclined surfaces of the labyrinth seal can undergo as a result of the axial movement of the shaft and the movements related to the self-alignment properties of the bearing. In this manner is it possible to secure that size of the slot always is kept at a low value, within desired ranges for obtaining an adequate sealing result, at the same time as mechanical contact between the slot surfaces is prevented.

Due to the design of the part of the labyrinth seal mounted in the plummer block housing as a split ring, it is possible to assemble itself to a safe and sealing engagement against mating surfaces in the plummer block housing without need for heating or the like.

Tests with the labyrinth seal according to drawing figure 1 have shown that during bearing operation, a pumping effect is obtained, causing oil, which tends to leak into the space outside the slot 23, to be pumped instantly back into the plummer block housing. This probably depends on the shape of the labyrinthic slot 23, where the inclined surfaces 19, 22 create said pumping effect. In the external cylinder surface of the sleeve 17 has been arranged in a manner knwon per se, a groove, in the embodiment having a W-shape, for collecting any possible leakage.

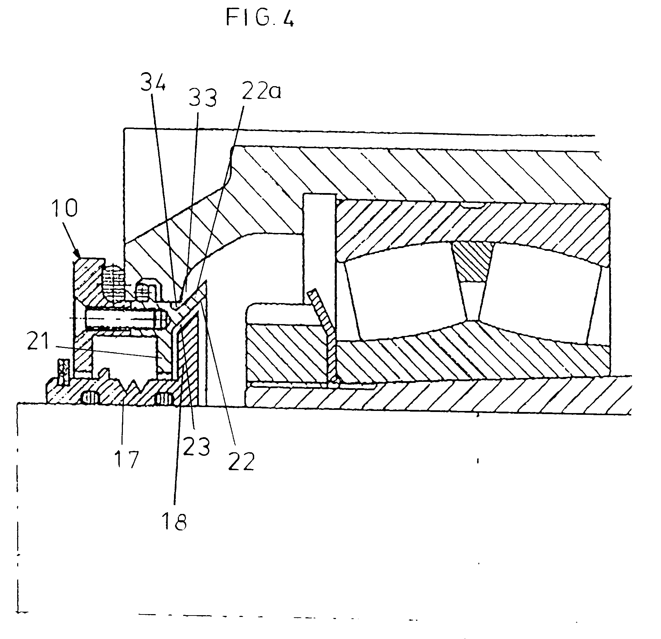

Fig. 4 shows in section a detail from Fig. 1, and hereby iy can be seen that the inclined surface 22 of the annular part is provided on a wall portion 22a projecting into the plummer block housing from the radial part 21, which wall portion 22a is arranged to slope radially outwards/axially inwards and with its side facing away from the slot 23 together with the inner wall of the plummer block housing form a drainage groove 33 adapted to lead oil splashing against the inner surface of the upper part of the plummer block housing, back to the lower part of the plummer block housing acting as an oil sump, and thereby to secure that the labyrinth seal is reached by nothing more than a minimum quantity of oil. The wall part 22a in the drainage groove 33 is preferably equipped with a circumferential countersunk channel 34 adapted to give a partly protected return channel for oil to the lower part of the plummer block housing, which return channel secures an undisturbed, almost laminar return oil flow.

The invention is not limited to the embodiment shown in the drawings and described in connection thereto, but variations and modifications are possible within the scope of the accompanying claims.

## Claims

1. A labyrinth seal (10) for oil lubricated, horizontally split plummer block housings (1) having through-openings (8) in the gables for a shaft (7) supported in at least one bearing (5) provided in the plummer block housing and incorporating a sleeve-shaped part (17) arranged on the shaft (7) and having a radial wall (18), the radially outer edge of which, is spaced apart from the shaft and forms an inclined surface (19), and an annular part arranged in the through opening (8) of the plummer block housing and provided with a radially extending part (21) and an inclined surface (22) being a complement to the inclined surface (19) of the sleeve-shaped part, said sleeve-shaped part (17) and said annular part, when assembled, enclosing between them a labyrinth slot (23) extending between its opposed side surfaces,
**characterized therein,**
that the inclined surface (22) of the annular part is provided on a wall portion (22a) projecting into the plummer block housing from the radial part (21), said wall portion (22a) being arranged to slope radially outwards/axially inwards and to form with its side facing away from the slot (23), together with the inner wall of the plummer block housing, a drainage groove (33) adapted to lead oil splashing against the upper part of the inner surface of the plummer block housing back to the lower part of the plummer block housing, which acts as an oil sump, thereby securing that the labyrinth seal is reached by nothing more than a minimum quantity of oil.

2. A labyrinth seal as claimed in claim 1,
**characterized therein,**
that the side of the wall part (22a) in the drainage groove (33) facing away from the slot (23) is provided with a counter-sunk recess (34) adapted to give a partly protected oil return flow chute to the lower part of the plummer block housing, said return flow chute guaranteeing an undisturbed, almost laminar oil flow.

3. A labyrinth seal as claimed in claim 1 or 2,
**characterized therein,**
that the sleeve-shaped part (17) is axially displaceably mounted on the shaft (7), but axially moveable to a limited extent relative to the annular part mounted in the plummer block housing.

4. A labyrinth seal as claimed in claim 3,
**characterized therein,**
that the axial movement of the sleeve-shaped part (17) relative to the annular part is limited by a radial wall (27) forming part of the annular part and provided between two protrusions (31,32) in the envelope surface of the sleeve-shaped part.

5. A labyrinth seal as claimed in anyone of the preceding claims,
**characterized therein,**
that the annular part of the labyrinth seal is split along a radial plane, the two parts thereof being equipped with radially projecting portions (25 and 27 resp.) adapted to be clamped in the through openings of the plummer block housing, when these parts are in their interconnected position.

6. A labyrinth seal as claimed in claim 5,
**characterized therein,**
that the two portions of the annular seal part are interconnected by means of screw joints (29).
